(19) Europäisches Patentamt
European Patent Office
Office européen des brevets

(11) EP 1 737 060 A1

(12) **EUROPEAN PATENT APPLICATION**
published in accordance with Art. 158(3) EPC

(43) Date of publication:
27.12.2006 Bulletin 2006/52

(51) Int Cl.:
*H01M 8/04* (2006.01)　　*H01M 8/06* (2006.01)
*B05B 9/04* (2006.01)　　*B65D 83/44* (2006.01)

(21) Application number: 05721360.5

(22) Date of filing: 16.03.2005

(86) International application number:
PCT/JP2005/005310

(87) International publication number:
WO 2005/091414 (29.09.2005 Gazette 2005/39)

(84) Designated Contracting States:
AT BE BG CH CY CZ DE DK EE ES FI FR GB GR
HU IE IS IT LI LT LU MC NL PL PT RO SE SI SK TR

(30) Priority: 24.03.2004 JP 2004086148

(71) Applicant: Tokai Corporation
Tokyo 151-0073 (JP)

(72) Inventor: NAKAMURA, Yasuaki, Tokay
Corporation
Sunto-gun, Shizuoka 410-1431 (JP)

(74) Representative: Lukaszyk, Szymon
Kancelaria Patentowa Lukaszyk
ul. Glowackiego 8
40-062 Katowice (PL)

(54) **FLOW RATE REGULATION FILTER, AND FUEL CONTAINER FOR FUEL CELL**

(57) A flow rate regulation filter provided in a discharge flow path of a fuel container for a fuel cell. The fuel container receives liquid contents of a liquid fuel for a fuel cell such that the contents can be discharged as a liquid or a gas, and the flow rate regulation filter is installed so as to regulate the amount of discharge of the liquid contents. The flow rate regulation filter is constituted of an elastic body having continuous bubbles and of a holder constructed from a formed body fusion-bonded to the elastic body and fixing the elastic body so that the elastic body closes the discharge flow path, and the elastic body and the holder are formed of a thermoplastic resin not corroded by the liquid contents. The discharge flow rate of the contents in the fuel container for a fuel cell can be regulated without requiring a major construction such as a liquid amount regulation mechanism.

Fig. 1

EP 1 737 060 A1

**Description**

Technical Field

This invention relates to a flow rate regulation filter for use in a fuel container for a fuel cell. This invention also relates to a fuel container for a fuel cell, which fuel container is provided with the flow rate regulation filter.

Background Art

Fuel cells, which are capable of operating at comparatively low temperatures and are expected to be efficient for reduction in apparatus sizes, have heretofore been used in a wide variety of use applications. For example, research has been conducted to utilize the fuel cells in the fields of electric power sources for mobile equipment, which electric power sources are required to be capable of actuating note type personal computers, portable telephones, and the like, over a long continuous operating time. The fuel cells may be classified into various cell systems. Also, fuels utilized in the fuel cells may be classified into several kinds of fuels.

For example, as direct methanol type fuel cells (DMFC's), into which methanol is supplied directly, there have heretofore been studied a system, in which a mixed solution containing methanol and pure water is utilized as the fuel, and a system, in which water obtained as a waste liquid from the fuel cell is utilized again, and in which pure methanol is utilized as the fuel. (As for the systems described above, reference may be made to, for example, Japanese Unexamined Patent Publication No. 2003-297401.)

Also, as a fuel cell, into which an aqueous methanol solution is sprayed, there has been known a system, in which nitrogen acting as a propellant, or dimethyl ether (hereinbelow referred to as DME) is mixed in the aqueous methanol solution, and in which the resulting aqueous methanol solution is utilized as the fuel. (As for the aforesaid fuel cell, into which an aqueous methanol solution is sprayed, reference may be made to, for example, Japanese Unexamined Patent Publication No. 6(1994)-310166.)

Further, as direct DME type fuel cells (DDFC's), there have heretofore been studied a system, in which a mixture of liquefied DME and water or a mixture of liquefied DME, water, and methanol is utilized as the fuel, and a DME modified system, in which hydrogen having been formed from DME is supplied into the fuel cell. (As for the systems described above, reference may be made to, for example, PCT Japanese Publication No. 2002-505511; and "Research and Development of Solid Polymer Type Fuel Cells: Research on a Solid Polymer Type Fuel Cell (PEFC) Using Dimethyl Ether (DME) as a Fuel," 2001 results report, issued by New Energy And Industrial Technology Development Organization, independent administrative corporation in Japan, date of issue: March 2002, [retrieved on March 1, 2004], Internet <URL; http//www.nedo.go.jp>.)

Recently, DME has attracted particular attention for its characteristics in that DME is a clean liquid fuel free from sulfur, heavy metals, and aromatic substances, in that DME has good lighting characteristics and good combustion characteristics, and in that DME is capable of being transported and stored comparatively easily. As for micro solid oxide type fuel cells ($\mu$SOFC's), there has been studied a system, in which a mixture of liquefied DME and water is utilized as the fuel. (As for the system described above, reference may be made to, for example, "Basic Technology Research Promoting Work: Research on a Micro Solid Oxide Type Fuel Cell Using DME·LPG as a Fuel," 2002 results report, issued by New Energy And Industrial Technology Development Organization, independent administrative corporation in Japan, date of issue: March 2003, [retrieved on March 1, 2004], Internet <URL;http//www.nedo.go.jp>.)

Furthermore, studies have heretofore been made on fuel containers for supplying fuel-cell fuels to fuel cells. It is desired that the fuel containers for fuel cells be small in size and light in weight and be made from resins for enabling confirmation of a quantity of residual contents in the fuel containers. Also, in cases where liquid fuels are utilized, it is desired that subsidiary devices for the equipment main body utilizing the fuel cells, particularly a suction pump, be omitted. Therefore, studies have heretofore been made on mechanisms, with which the fuel container for accommodating the fuel is capable of discharging and supplying the fuel by the ability of the fuel container itself. Further, resin containers having a resistance to DME have been studied. The applicant proposed the resin containers having the resistance to DME in, for example, Japanese Unexamined Patent Publication No. 2003-176899 and Japanese Patent Application Nos. 2003-270600 and 2003-297049.

In cases where the liquid fuels for the fuel cells are to be supplied to small-sized fuel cells, it is necessary for the fuel supply flow rate to be low. Therefore, the capability of reliable fuel supply at small flow rates is required of the fuel containers for fuel cells. In particular, fuel consumption rates of the small-sized fuel cells are as low as several milliliters to ten-odd milliliters per several hours. Accordingly, in order for the mechanisms on the side of the fuel cells to be simplified, it is important that the container main body side has the discharge characteristics such that the injection rate, at which the contents in the fuel containers are injected from the fuel containers into the fuel cells, may be suppressed at low rates.

In the cases of ordinary aerosol containers, in order for the contents injection rate to be suppressed, a technique has heretofore been employed, wherein a valve bore diameter or an injection bore diameter is set to be small. However, the minimum possible valve bore diameter or the minimum possible injection bore diameter is limited to a diameter of 0.3mm. In such cases, all of the contents will be injected within several minutes. Therefore, the technique, wherein the valve bore diameter or the injection bore diameter is set to be small, is not appropriate for fuel containers for fuel cells. Also, in cases where a technique for utilizing natural injection of the contents by gravity is employed, the flow rate per hour becomes markedly low, and therefore the problems are encountered in that the equipment for which the technique described above is capable of being employed is limited.

Ordinarily, as for the containers of which the reliable injection rate is strictly required, it is necessary for a liquid quantity adjusting mechanism to be utilized. However, a large-scale liquid quantity adjusting mechanism is not capable of being used for the fuel containers for fuel cells, which are required to be small in size and light in weight.

The inventors conducted studies about techniques for locating a filter for flow rate regulation, such as a flow rate regulation filter utilized for flame regulation in a gas lighter, in a main body of a fuel container for a fuel cell. The studies revealed that the filters used in gas lighters, which filters are made from urethane foam materials, rubber sponge materials, or non-woven fabric materials, have the problems in that, in cases where the liquids accommodated in the gas lighters contain methanol, the filters suffer from erosion by methanol or swelling with methanol, and alterations in flow rate occur. The filters described above thus have the problems with regard to durability.

Also, in cases where the liquids accommodated in the gas lighters contain DME, the filters suffer from corrosion. Further, in cases where the liquids accommodated in the gas lighters contain DME, and in cases where the filters made from the non-woven fabric materials are used, the problems occur in that the binders utilized for the non-woven fabric materials suffer from attacks of DME, and fuzz of the fabric materials thus occur and causes nozzle clogging to occur.

In view of the above circumstances, the primary object of the present invention is to provide a flow rate regulation filter, which enables a discharge rate of contents to be regulated easily, which is free from erosion by DME, methanol, and ethanol acting as liquid fuels, and which does not dissolve impurities, such as dust and oily substances, into the liquid fuels.

Another object of the present invention is to provide a fuel container for a fuel cell, which fuel container is provided with the flow rate regulation filter.

Disclosure of Invention

The present invention provides a flow rate regulation filter adapted to be located in a discharge flow path of a fuel container for a fuel cell, which fuel container accommodates liquid contents of a liquid fuel for the fuel cell such that the fuel container is capable of discharging the liquid contents in a liquid state or a gaseous state, the flow rate regulation filter being adapted for regulation of a discharge rate of the liquid contents, the flow rate regulation filter comprising:

i) an elastic body, which has open cells, and

ii) a holder, which is constituted of a molded body having been fusion bonded to the elastic body, and which secures the elastic body such that the elastic body may block the discharge flow path,

each of the elastic body and the holder being constituted of a thermoplastic resin having a resistance to corrosion by the liquid contents.

The flow rate regulation filter in accordance with the present invention should preferably be modified such that the thermoplastic resin is constituted of at least one kind of resin selected from the group consisting of a polyethylene resin, a polypropylene resin, a polyoxymethylene resin, a polyethylene terephthalate resin, a polyethylene naphthalate resin, and a polyacrylonitrile resin.

Also, the flow rate regulation filter in accordance with the present invention should preferably be modified such that the elastic body is obtained from a process comprising the steps of: mixing the thermoplastic resin, a water-soluble organic compound, and a water-soluble polymeric material together, extracting the water-soluble organic compound and the water-soluble polymeric material with water from the resulting mixture, and thereby removing the water-soluble organic compound and the water-soluble polymeric material from the resulting mixture.

Further, the flow rate regulation filter in accordance with the present invention should preferably be modified such that pore diameters of the elastic body are at most $30\mu m$, and a porosity of the elastic body falls within the range of 60% to 90%.

The present invention also provides a first fuel container for a fuel cell, the fuel container comprising:

i) a container main body provided with a connecting section, which has an opening that is open to an exterior, and which is adapted for supplying liquid contents to the exterior,

ii) a storing chamber, which is formed within the container main body and which stores the liquid contents,

iii) pushing-out means for applying a pressure of a compressed gas, which has been confined in a gas chamber partitioned from the storing chamber, to the liquid contents, which have been stored in the storing chamber, and thereby pushing out the liquid contents from the storing chamber,

iv) a valve for opening and closing a path between the storing chamber and the connecting section, and

v) a flow rate regulating filter in accordance with the present invention, which flow rate regulating filter is located within the path extending from the storing chamber to the connecting section,

a discharge rate of the liquid contents being regulated by the flow rate regulation filter.

The first fuel container for a fuel cell in accordance with the present invention should preferably be modified such that the liquid contents are one kind of liquid contents selected from the group consisting of methanol; a mixture of methanol and pure water; ethanol; a mixture of ethanol and pure water; a mixture of dimethyl ether and pure water; a mixture of dimethyl ether, pure water, and methanol; and a mixture of dimethyl ether, pure water, and ethanol.

The term "pure water" as used herein means water that is capable of being regarded as being approximately identical with deionized water, which is obtained from processing for removing impurities as much as possible. The term "pure water" as used herein embraces water, which is pure as a chemical species, and purified water.

The present invention further provides a second fuel container for a fuel cell, the fuel container comprising:

i) a container main body provided with:

a) a connecting section, which has an opening that is open to an exterior, and which is adapted for supplying contents to the exterior, and

b) a storing chamber, which stores the contents,

ii) a valve for opening and closing a path between the storing chamber and the connecting section, and

iii) a flow rate regulation filter in accordance with the present invention, which flow rate regulation filter is located within the path extending from the storing chamber to the connecting section,

a gas, which results from vaporization of liquid contents having been stored in the storing chamber, being discharged via the valve by a pressure of the gas,

a discharge rate of the gas being regulated by the flow rate regulation filter.

The second fuel container for a fuel cell in accordance with the present invention should preferably be modified such that the liquid contents are constituted of dimethyl ether.

The present invention still further provides a third fuel container for a fuel cell, the fuel container comprising:

i) a container main body provided with a connecting section, which has an opening that is open to an exterior, and which is adapted for supplying liquid contents to the exterior,

ii) a storing chamber, which is formed within the container main body and which stores the liquid contents,

iii) a valve for opening and closing a path between the storing chamber and the connecting section, and

iv) a flow rate regulation filter in accordance with the present invention, which flow rate regulation filter is located within the path extending from the storing chamber to the connecting section,

the liquid contents, which have been stored in the storing chamber, being discharged via the valve by a pressure of the liquid contents,

a discharge rate of the liquid contents being regulated by the flow rate regulation filter.

The third fuel container for a fuel cell in accordance with the present invention should preferably be modified such that the liquid contents are one kind of liquid contents selected from the group consisting of dimethyl ether; a mixture of dimethyl ether and pure water; a mixture of dimethyl ether, pure water, and methanol; and a mixture of dimethyl ether, pure water, and ethanol.

The present invention also provides a first pressure container, comprising:

i) a container main body provided with a connecting section, which has an opening that is open to an exterior, and which is adapted for supplying liquid contents to the exterior,

ii) a storing chamber, which is formed within the container main body and which stores the liquid contents,

iii) pushing-out means for applying a pressure of a compressed gas, which has been confined in a gas chamber partitioned from the storing chamber, to the liquid contents, which have been stored in the storing chamber, and thereby pushing out the liquid contents from the storing chamber,

iv) a valve for opening and closing a path between the storing chamber and the connecting section, and

v) a flow rate regulation filter in accordance with the present invention, which flow rate regulation filter is located within the path extending from the storing chamber to the connecting section,

a discharge rate of the liquid contents being regulated by the flow rate regulation filter.

The present invention further provides a second pressure container, comprising:

i) a container main body provided with:

a) a connecting section, which has an opening that is open to an exterior, and which is adapted for supplying contents to the exterior, and

b) a storing chamber, which stores the contents,

ii) a valve for opening and closing a path between the storing chamber and the connecting section, and
iii) a flow rate regulation filter in accordance with the present invention, which flow rate regulation filter is located within the path extending from the storing chamber to the connecting section,

a gas, which results from vaporization of liquid contents having been stored in the storing chamber, being discharged via the valve by a pressure of the gas,
a discharge rate of the gas being regulated by the flow rate regulation filter.

The present invention still further provides a third pressure container, comprising:

i) a container main body provided with a connecting section, which has an opening that is open to an exterior, and which is adapted for supplying liquid contents to the exterior,

ii) a storing chamber, which is formed within the container main body and which stores the liquid contents,

iii) a valve for opening and closing a path between the storing chamber and the connecting section, and

iv) a flow rate regulation filter in accordance with the present invention, which flow rate regulation filter is located within the path extending from the storing chamber to the connecting section,

the liquid contents, which have been stored in the storing chamber, being discharged via the valve by a pressure of the liquid contents,
a discharge rate of the liquid contents being regulated by the flow rate regulation filter.

The flow rate regulation filter in accordance with the present invention comprises (i) the elastic body, which has the open cells, and (ii) the holder, which is constituted of the molded body having been fusion bonded to the elastic body, and which secures the elastic body such that the elastic body may block the discharge flow path, each of the elastic body and the holder being constituted of the thermoplastic resin having a resistance to corrosion by the liquid contents. Therefore, the flow rate regulation filter in accordance with the present invention does not suffer from erosion by the liquid contents of the liquid fuel for the fuel cell. Accordingly, with the flow rate regulation filter in accordance with the present invention, the problems are capable of being prevented from occurring in that a nozzle of the fuel container for a fuel cell is clogged with substances dissolved out from the filter due to corrosion by the liquid contents or with corrosion products of the filter. Also, the flow rate regulation filter in accordance with the present invention, which has the resistance to corrosion, is capable of having a high durability.

Further, with the flow rate regulation filter in accordance with the present invention, the discharge rate of the liquid contents is capable of being regulated easily by the elastic body having the open cells. Therefore, in cases where the flow rate regulation filter in accordance with the present invention is employed in the fuel container for a fuel cell, the fuel container for a fuel cell is capable of being obtained, which is capable of supplying the fuel little by little and in a reliable manner to the fuel cell. In particular, the flow rate regulation filter in accordance with the present invention is adapted to be located in the discharge flow path of the fuel container for a fuel cell, which fuel container accommodates the liquid contents of the liquid fuel for the fuel cell such that the fuel container is capable of discharging the liquid contents in a liquid state or a gaseous state. Therefore, the fuel container for a fuel cell need not be provided with a constitution, such as a large-scale liquid quantity adjusting mechanism. Accordingly, the flow rate regulation filter in accordance with the present invention is capable of satisfying the demands for reduction in size and weight of the fuel container for a fuel cell.

Furthermore, the flow rate regulation filter in accordance with the present invention is capable of being employed in both the cases, wherein the liquid contents of the liquid fuel for the fuel cell are to be discharged in the liquid state, and the cases, wherein the liquid contents of the liquid fuel for the fuel cell are to be discharged in the gaseous state. Therefore, in cases where the flow rate regulation filter in accordance with the present invention is employed in a pressure container having been known heretofore, the fuel container for a fuel cell, which fuel container is capable of performing reliable fuel supply, is capable of being obtained.

Each of the fuel containers for a fuel cell in accordance with the present invention is provided with the flow rate regulation filter in accordance with the present invention.

Therefore, each of the fuel containers for a fuel cell in accordance with the present invention need not be provided with a constitution, such as a large-scale liquid quantity adjusting mechanism. Also, each of the fuel containers for a fuel cell in accordance with the present invention is capable of supplying the fuel little by little and in a reliable manner to the fuel cell.

Brief Description of Drawings

Figure 1A is a plan view showing an embodiment of the flow rate regulation filter in accordance with the present invention,

Figure 1B is a sectional view showing the embodiment of the flow rate regulation filter in accordance with the present invention,

Figure 1C is an exploded sectional view showing an elastic body and a holder before being fusion bonded to each other for forming the embodiment of the flow rate regulation filter in accordance with the present invention,

Figure 2 is a mid-sectional front view showing a first embodiment of the fuel container for a fuel cell in accordance with the present invention,

Figure 3 is an enlarged sectional view showing a part of the first embodiment of the fuel container for a fuel cell shown in Figure 2, which part contains a flow rate regulation filter and a valve in a closed state,

Figure 4 is an enlarged sectional view corresponding to Figure 3, in which the valve is in an open state,

Figure 5 is a sectional view showing a second embodiment of the fuel container for a fuel cell in accordance with the present invention,

Figure 6 is an enlarged sectional view showing a part of the second embodiment of the fuel container for a fuel cell shown in Figure 5, which part contains the flow rate regulation filter and the valve in the closed state, and

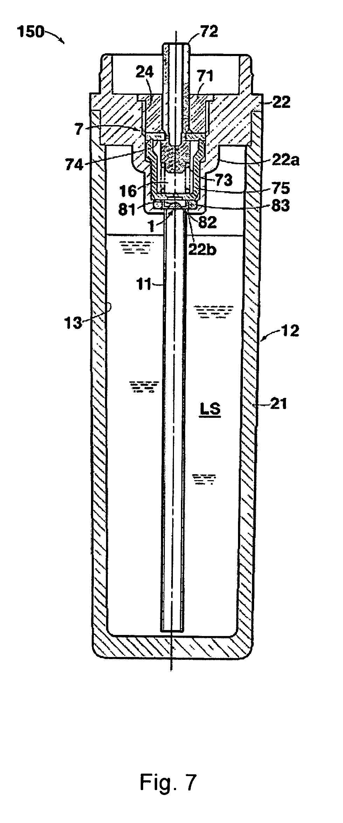

Figure 7 is a sectional view showing a third embodiment of the fuel container for a fuel cell in accordance with the present invention.

Best Mode for Carrying Out the Invention

The present invention will hereinbelow be described in further detail with reference to the accompanying drawings.

A flow rate regulation filter of the present invention is installed in a discharge flow path of a fuel container of a fuel cell wherein the fuel container accommodates the liquid contents of a liquid fuel for the fuel cell such that the fuel container is capable of discharging the liquid contents in a liquid state or a gaseous state, which is characterized in that

the flow rate regulation filter comprises of an elastic body having continuous pores, and a holder which consists of a molded body fused to the elastic body to ensure that this elastic body blocks the discharge flow path, and the elastic body and the holder are made of a thermoplastic resin which is not corroded by the liquid contents.

As a thermoplastic resin which is not corroded by liquid contents, there are polyolefins such as polyethylene, polypropylene, polymethylpentene, polybutylene, etc. and polylesters such as polyoxymethylene, polyethylene terephthalate, polybutylene terephthalate, polylethylenenaphthalate, polyacrylate, polycyclohexylenedimethylterephthalate, or polyacrylonitiles. In particular, it is preferred that there be at least one selected from the group consisting of polyethylene, polypropylene, polyoxymethylene, polyethylene terephthalate, polyethylenenaphthalate, or polyacrylonitrile. In particular, it is preferred that there be at least one selected from the group consisting of polyethylene, polypropylene, polyoxymethylene, polyethylene terephthalate, polyethylenenaphthalate, or polyacrylonitrile.

In addition to high density polyethylenes, low density polyethylenes, linear chain low density polyethylenes, polyethylene can be ethylene copolymers such as ethylene and vinyl acetate copolymers, ethylene methacrylate copolymers, ethylene and methacrylate copolymers wherein a part is replaced with a metallic salt to form ionomers, and polyoxymethylene can be a homopolymer or a copolymer.

The aforementioned elastic body is obtained as follows. After a thermoplastic resin, an aqueous organic compound and an aqueous polymer material are mixed, and the aqueous organic compound and said aqueous polymer material are extracted with water and removed. More precisely, a thermoplastic resin is mixed with an aqueous component containing an aqueous organic compound and an aqueous polymer material at a volumetric ratio of 35 to 95/65 to 5 at a specific volumetric ratio to form a mixed body maintaining an aqueous component in the three-dimensional continuous network backbone constituted of a thermoplastic resin, and the mixture is brought into contact with water to extract and remove the water soluble portion from the mixture.

The thermoplastic resin is fused during the mixing process and can be uniformly dispersed with other components or those which are not corroded by liquid contents can be used. Generally one kind of a thermoplastic resin is used. However, if the melting point or the softening point is relatively similar and if they are compatible with each other, two or more kinds can be used together.

The ratio between the thermoplastic resin and an aqueous component can be adjusted appropriately based on the kinds of the thermoplastic resin such that a three-dimensional continuous network backbone structure is formed. In this case, mixing of a thermoplastic resin, an aqueous organic compound and an aqueous polymer material can be carried out in an ordinary apparatus such as rotor type mixer, kneader, blending roller, Banbury mixer and biaxial extruder, etc.

When mixing, it is desirable that a thermoplastic resin and an aqueous polymer material are fused or an aqueous organic compound is preferably provided still in a solid state. Therefore, an aqueous organic compound is selected from those having a higher melting point than the melting point or softening point of the thermoplastic resins and also it is selected from those having a higher melting point than the melting point of the aqueous polymer materials. In this case, the temperature for mixing the aforementioned mixture is less than the melting point of the aqueous organic compound and it is also adjusted to exceed the melting point or the softening point of the thermoplastic resins.

The compounds satisfying the aforementioned conditions can be used as aqueous organic compounds and compounds which are soluble in water or warm water wherein the compounds can be crystallized or have a melting point can be used. Specifically, the following compounds are available: urea, thiourea, dicyanodiamide, mannit, fructose, sugars such as glucose, mannitol, trimethylolethane, pentaerythritol, acrynol, aconitic acid, aconic acid, acetylbenzoic acid, acetylthiourea, acetylenecarboxylic acid, acetylamidephenol, atropinsulfate, anisic acid, aniline hydrochloride, aminoacetonilide, aminobenzoic acid, aminovalerianic acid, aminocinnamic acid, aminobutyric acid, alanine, arsanilic acid, arbutin, arecaidine, alloxan acid, sodium benzoate, anthranilic acid, isatin, isatin oxime, isocamphoronic acid, isoaldaric acid, isonicotinic acid, isonicotinic acid hydrazide, isovarelamide, isophthalonitrile, isoproterenol hydrochloride, etc.

The compounds satisfying the aforementioned conditions can be used as aqueous polymer materials and the compounds which can be extracted and removed easily by water or warm water along with the aqueous organic compounds can be used. For example, surfactants such as polyethylene glycol, polyethylene glycol, polypropylene glycol copolymer, and polyoxyethylene alkylether, and in particular, nonionic surfactants wherein an alcohol is added to polyethylene glycol or polyethylene glycol and polypropylene glycol copolymer, polyaminsulfon, polyvinyl alcohol, polyvinylmethylether and polyallylamine, etc. are preferable.

After mixing the components, the aforementioned mixture formed is brought into contact with water. In this case, it is desirable to form the mixture in a sheet form. A sheet is formed by an appropriate method such as press molding, extrusion molding, etc. In the case of extrusion molding, a mixture can be heated uniformly so that a homogeneous sheet with a high mechanical strength can be preferably obtained.

Contact with water can be carried out by any method as long as the aqueous component can be extracted and removed sufficiently. In particular, a method of immersion of the mixture in a sheet form is desirable. When the aqueous component is extracted and removed from the mixture, a preferred water temperature ranges from 50 to 90°C.

An elastic body having continuous pores has liquid passage characteristics such that the permeable flow rate of liquid fuel has a desirable constant flow rate against the extrusion pressure. The pore size of the elastic body having continuous pores is 30 $\mu$m or preferably 20 $\mu$m or less. The void ratio ranges from 60 to 90 and preferably from 60 to 75%.

In this case, the pore size is the mean value of the pore sizes when the cross-section of the porous material is observed under an electron microscope and pictures are taken. The pore ratios were calculated as follows. The weight of a porous material formed in a sheet form is divided by the volume calculated from the measured thickness of the porous body and the bottom area to obtain an apparent density of the porous body and then the pore ratio is calculated from the following equation:

$$\text{(Apparent density of the porous body/true density of the thermoplastic resin) x 100}$$

In this case, an elastic body having continuous pores can be manufactured by the aforementioned method. A commercial elastic body having continuous pores with a pore ratio of 60 to 90% and with a pore diameter of 30 $\mu$m or less can be used.

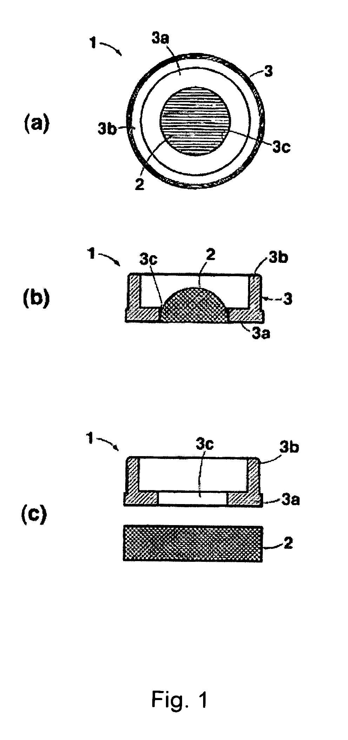

Next, the structure of a filter is explained based on Fig. 1. Fig. 1 is a plane view of a filter (Fig. 1A), a cross-sectional view (Fig. 1B) and disassembled cross-sectional view before preparation (Fig. 1C). This filter 1 is comprised of an elastic body 2 having continuous pores and a holder 3 on which the elastic body is fixed. As shown in Fig. 1C, the elastic body 2 contains micro pores due to continuous pores that are manufactured as mentioned above (or commercial products having a specified pore size and a pore ratio) and punched into a specified disk-shape. A holder 3 is made of a resin molded product. It has a disk portion 3a having a ventilation hole 3c in the middle and a cylinder portion 3b connected to the outer circle of the disk portion 3a. The elastic body 2 is thermally fused in a pressed state on the circular edge of the ventilation hole 3c on the bottom of the disk portion 3a. As a resin material for the holder 3, one of more kinds which are tolerant to the liquid fuel as in the case of the elastic body 2, are selected from the group consisting of ethylene, propylene, polyoxymethylene, polyethylene terephthalate, polyethylene naphthalate, or polyacrylonitrile, and are combined with a fusibility with the material of the elastic body 2.

The aforementioned filter is fused as follows. As shown in Fig. 1C, an elastic body 2 formed in a specified shape and a holder 3 are provided. The bottom surface of the disk portion 3a of the holder 3 is pressed against the elastic body 2 in a sheet form, and while the elastic body 2 is compressed, the elastic body 2 is fused thermally by pressing a sealer (not shown) which has been heated to a specified temperature.

After fusion, the filter 1 is formed such that the elastic body 2 forms a dome shape while raising the interior from the ventilation hole 3c on the bottom of the holder 3 as shown in Fig. 1A and Fig. 1B, the elastic sheet at the fused portion on the bottom of the holder 3 forms a resin to create an airtight state in this area so that the flow of the liquid fuel towards the outer circumferential direction can be prevented.

The aforementioned elastic body 2 and the holder are fixed by thermal fusion or ultrasonic fusion. When performing thermal fusion or ultrasonic fusion, temperature conditions and fusion time are adjusted such that the liquid passage properties of the elastic body 2 in the center are not interfered with.

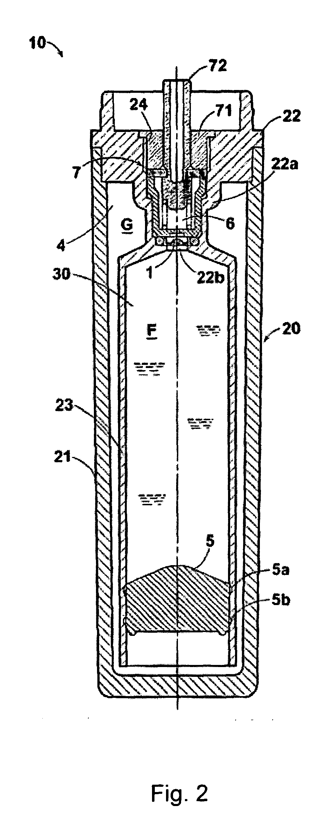

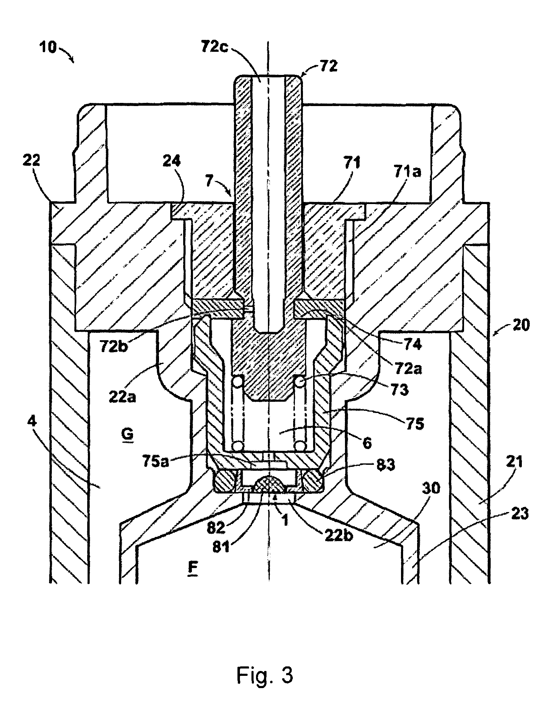

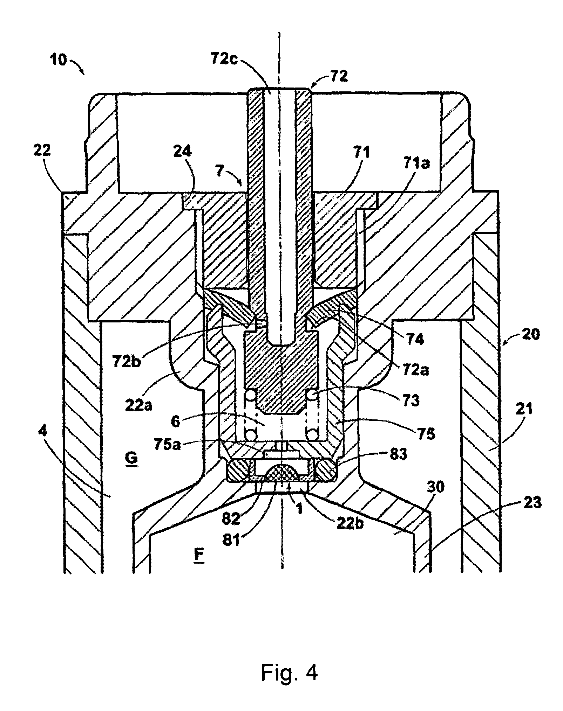

Subsequently, Embodiment 1 of a fuel container for a fuel cell is explained below. Fig. 2 is a central cross-sectional front view of a fuel container for fuel cells in Embodiment 1. Fig. 3 is an enlarged cross-sectional view for the filter and valve in Fig. 2. Fig. 4 is the same cross-sectional view when the valve is operated to be opened.

A fuel container 10 in the mode shown in Fig. 2 contains a liquid fuel F for a fuel cell as liquid contents and supplies the liquid fuel at a specified low flow rate to the fuel cell ejection. The fuel container 10 contains one liquid fuel F for the fuel cell selected from the group consisting of methanol, methanol and pure water, ethanol, ethanol and pure water, DME and pure water, DME and pure water and methanol, and DME, pure water and ethanol. It supplies a fuel to a direct methanol type fuel cell (DMEC) or to a direct DME type fuel cell (DDFC) and it is installed in the fuel cell body (not shown).

The fuel container 10 comprises of a container body 20 having a connection part 24 opened for supplying liquid fuel F, a storage chamber 30 which is formed in the interior of the container body 20 and which contain liquid fuel F to be supplied to a fuel cell (not shown), a gas chamber 4 formed in the interior of the container body 20 for sealing a compressed gas G as an extrusion means to generate a stress by pressurizing the liquid fuel F in the storage chamber 30 by mutually connecting with the storage chamber 30 at the edge, a piston-like partition member (extrusion member) 5 which is installed freely movable to the storage chamber 30 for partitioning between the liquid fuel F and the compressed gas G, a valve 7 which connects/shuts down the passage 6 between the storage chamber 30 and the connection portion 24, and a flow regulation filter 1 via the passage 6.

The aforementioned container body 20 is made of a resin and is comprised of the following parts: a cylindrical outer container 21 forming the external shape, a lid body 22 for sealing the upper opening portion of the external container 21, and a cylindrical inner container 23 which is integrally formed with this lid body 22 and which forms a double structure inside of the outer container 21 having the lower opening, a connection part 24 in the center of the lid body 22, a valve 7 and a filter 1.

A storage changer 30 is configured in the upper space in the inner container 23 using a partition member 5, and a gas chamber 4 is configured in the space between the outer container 21 and the inner container 23, and in the lower space in the inner container 23 below the partition member 5.

The lid body 22 has a cylindrical part 22a around the lower portion of the central opening and the lower edge of the cylindrical part 22a is connected to the upper wall portion of the inner container. A through-hole 22b is opened in the bottom center of the aforementioned cylindrical part 22a forming a path 6 connecting between the storage chamber 30 and the connection portion 24. A filter 1 and a valve 7 are installed in this path 6. The flow rate is adjusted with the filter 1 and after obstacles are removed from the liquid fuel F (liquid contents), it is discharged/supplied according to the connecting/blocking of the connection by the valve 7. The details of the valve 7 will be described later with reference to Fig. 3 and Fig. 4.

The lower end portion of the inner container 23 is open without being connected to the bottom of the outer container 21. The piston-like partition member 5 which is inserted in the inner container 23 in a slidable manner is in contact air-tightly with the inner wall of the cylindrical-shape inner container 23 using upper and lower sealing parts 5a and 5b on the outer circumference such that it moves up and down in a stable manner and the liquid fuel F is sealed in the storage chamber 30 as the upper space. This partition member 5 functions as a moving partition separating the liquid fuel F contained in the storage chamber 30 from the compression gas G contained in the gas chamber 4. Pressure is applied by the compression gas G acting on the back surface of the partition member 5 to the front surface of the liquid fuel F. As a result, when the valve is operated to connect, the liquid fuel F is pushed out via the filter from the connection portion 24.

The partition member 5 moves its location based on the volume of the storage of the remaining liquid fuel F in the storage chamber 30 and accordingly the volume of the compression gas G changes to change the pressure. A pressure required to move the partition member 5 to be able to push out until the amount of storage of liquid fuel F is totally exhausted is secured.

In addition, on the surface of the sealing parts 5a and 5b of the aforementioned partition member 5 or on the inner wall surface of the inner container 23, or on both areas, it is desirable to apply a low friction coefficient coating such as a non-eluting PTFE (polytetrafluoroethylene) coating or DLC (diamond-like-carbon) coating in order to reduce moving resistance of the partition member 5 against the liquid fuel F to secure definitely good operation even if the compression gas G decreases.

It is desirable to use non-oxygen containing gas such as nitrogen gas, carbon dioxide gas and deoxygenated air for the compression gas G sealed in the gas chamber 4, from the standpoint of the fact that oxygen having adverse effects on the reactions in the fuel cell may contaminate the liquid fuel F and also from the standpoint of the fact that it prevents liquid fuel F from oxidation.

An example of mechanism of the valve 7 will be explained. Fig. 3 shows an opened valve state and Fig. 4 shows a closed valve state. The valve 7 comprises of a guide screw 71 as a fixing member to the lid body 22, a rod-shaped stem 72 moving in accordance with the connection operation with the fuel cell, a spring 73 urging the stem 72 to the closing direction, a disk-shaped stem gasket as a valve body to open and close the supply of the fuel, and a cylindrical fixed sleeve 75 for pressing the filter 1 as well as holding the lower end of the spring 73.

In addition, for the path 6 to the connection portion 24 of the lid body 22, both filter 1 and O-ring 83 are inserted in the bottom while a fixed sleeve 75 having a through-hole 75a is inserted into the center of the bottom portion. A spring 3 is inserted into the interior and a stem 72 is inserted on the top. A gasket 74 is engaged with the outer circumference of the stem 72. A screw part 71a of the guide screw 71 is screwed from the upper section of the stem 72 into the screw hole of the connection portion 24 of the lid body 22 so that the stem 72 is urged to the guide screw 71 above due to the urging force of the spring 73 and the outer circumferential portion of the gasket 74 is maintained such that the inner circumferential portion is held in a dislocatable position by holding in the gap between the guide screw 71 and the upper end of the fixed sleeve 75. The filter 1, as shown in Fig. 3, is installed at the position of the front stage of the valve 7. The filter 1 is installed such that the flow of the liquid fuel F to the outer circumferential portion of the fixed sleeve 75 of the valve 7 is sealed by installing an O-ring 83 on the outer circumference.

In the aforementioned stem 72, a circumferential groove 72c is formed on the outer circumference and a fine opening 72b is opened on the bottom of the circumferential groove 72a to be connected to the center path 72c, but the center path 72c is opened to the upper end ejection outlet. In this case, the bottom of the center path 72c is closed. In addition, an inner circumferential portion of the gasket 74 is inserted into the circumferential groove 72a of the aforementioned stem 72. As shown in Fig. 3, if the aforementioned fine opening 72b is closed due to the elastic tight contact of the gasket 74 on the inner circumferential surface, the fuel path 6 is shut down and the supply of fuel is closed. In contrast, as shown in Fig. 4, if the stem 72 is pushed in against the spring 73, the inner circumferential portion of the gasket 74 deforms along its movement to open the fine opening 72b to connect a path 6 so that the liquid fuel F at an adjusted flow rate while passing through the filter 1 from the storage chamber 30 enters the center path 72c of the stem 72 from the fine opening 72b to be discharged and supplied from the upper opening end.

Compressed gas G is sealed in the gas chamber 4 before injecting the liquid fuel F into the storage chamber 30. For example, as the compressed gas G is injected via the valve 7 into the storage chamber 30, the partition member 5 descends and the partition member 5 is inclined at the lower end position, or the up and down of the partition member 5 is in a connected state by installing a groove at the lower end of the inner wall of the inner container 23 to inject the compressed gas from the storage chamber 30 to the gas chamber 4. When the gas chamber 4 reaches a specific pressure, the injection of the compressed gas is stopped to open the valve 7 which was closed to exhaust the compressed gas in the storage chamber 30.

In response, the partition member 5 elevates and the storage chamber 30 returns to a sealed state and with further gas exhaustion, the partition member 5 moves up to the upper end of the inner container 23 in such a state that the compressed gas pressure of the gas chamber 4 acts on its back portion to exhaust all gases from the storage chamber 30 so that the compressed gas G is sealed in the gas chamber 4. Subsequently a fuel injection means is connected and the liquid fuel F is injected into the storage chamber 30 via the valve as the partition member 5 descends. Thus, a fuel container 10 for a fuel cell can be configured such that liquid fuel F is stored in a dischargeable state.

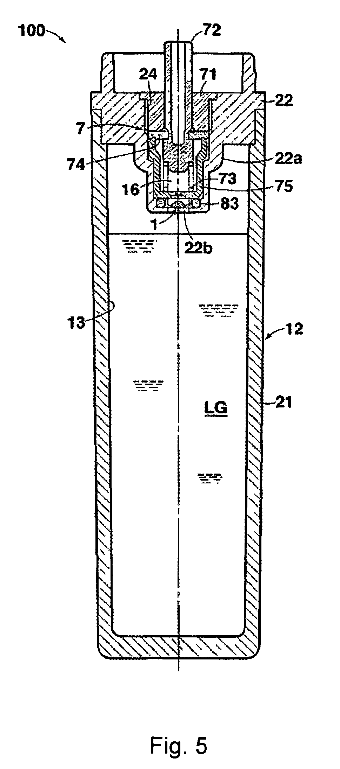

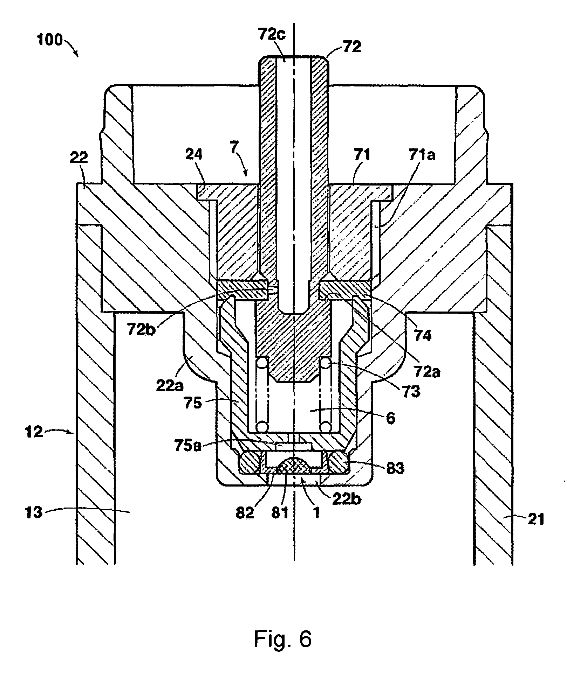

Next, Embodiment 2 of the fuel container for a fuel cell will be explained. Fig. 5 is a central cross-sectional view of a fuel container for a fuel cell concerned in Embodiment 2 and Fig. 6 is an enlarged view of the filter and the valve portions.

A fuel tank 100 stores DME liquefied gas LG as a gas fuel for a fuel cell. In this embodiment, the contents are in a pressurized state so that gas is discharged. Thus, the inner container 23 constituting a pressing means, a partition member 5 and a gas chamber 4 in the fuel container for a fuel cell in Embodiment 1 as shown in Fig. 2 are not required. In addition, the valve 7 has the same structure. The identical structural components in Fig. 2 and Fig. 3 are indicated by the same symbols in Fig. 5 and Fig. 6 and their explanation is omitted.

In the case of the fuel container 100 as shown in Embodiment 2, when water is added to DME in the installation direction as shown in this figure, only DME can be discharged, but the contents cannot be fetched as a liquid. In the case when the fuel container 100 is used in an up-side-down position, it is possible to fetch the contents in a liquid state. Thus, if the mode of application of the fuel container 100 is limited to use in an up-side-down position, water can be added to DME liquefied gas as contents. The mixing ratio of water is not particularly limited. It can be selected appropriately based on the contents.

The container body comprises of an outer container 21 and a lid body 22. Liquefied gas LG containing DME is stored in the storage chamber 13 formed in the interior. A path 16 to the connection portion 24 is formed in the interior of the cylindrical part 22a projecting from the bottom of the lid body 22, and the valve 7 and the flow rate regulating filter 1 are arranged similarly. A filter 1 comprises of an elastic body 2 having continuous pores as explained above, and a holder 3 fused to the elastic body. In the fuel container 100 in this embodiment, DME liquefied gas LG as contents passes through a flow rate regulating filter 1 when the valve 7 is in an open state such that the flow rate is regulated to be discharged.

Fig. 8 is a cross-sectional view showing Embodiment 3 for the fuel container for a fuel cell. The liquid LS contained in the fuel container for fuel cell 150 in Embodiment 3 is a liquefied gas mixed fluid consisting of the stock solution as a major component and DME as an ejection agent.

In Embodiment 3, as in the case of the fuel container for a fuel cell shown in Fig. 5, an inner container 23, a partition member 5, and a gas chamber 4 are not required. In order to discharge content liquids LS, a suction tube 11 is installed (other parts are identical to the structure shown in Fig. 5 so that the same symbols are used as those in Fig. 5 and their explanation is omitted). Under the pressure of DME as an ejection agent contained in the stored liquid LS in the storage chamber acting on the liquid surface of the stored liquid LS, the stored liquid LS is pushed up from the tip of the suction tube 11 to the valve 7 and when the valve 7 opens, the flow rate is regulated through the filter 1 and the liquid is discharged at a specified flow rate.

The container body 12 is comprised of an outer container 21 and a lid body 22, and a storage chamber 13 formed interior contains one of the liquids selected from the group consisting of DME, or DME and pure water, or DME, pure water and methanol, or DME, pure water and ethanol.

One end of the suction tube 11 is connected to a through-hole 22b of the cylindrical portion 22a projected on the bottom of the lid body 22, and the other end is opened near the bottom of the outer container 21. A path 16 reaching the connection portion 24 is formed in the interior of the cylindrical part 22a, and a valve 7 and a filter 1 are arranged similarly. A filter 1 comprises of an elastic body 2 having continuous pores as described above and a holder 3 which is fused to the elastic body. The flow rate of the content liquid LS is adjusted while passing through the filter 1 to be discharged.

An example of a fuel container for a fuel cell wherein a flow rate regulation filter of the present invention is arranged is explained below.

Example 1

An elastic body 2 of the filter 1 was prepared as follows. Urea and polyethylene glycol were finely pulverized and mixed with low density polyethylene resin which has been plasticized by heating, and an emulsion is prepared to have a mean cell diameter of 30 $\mu$m and a pore ratio of 70% was molded in a sheet form with a thickness of 1 mm by extrusion molding. Subsequently, the formed sheet was rinsed with water to remove urea and polyethylene glycol to prepare a porous sheet made of only a resin. An elastic body was obtained by punching out in a specified shape. Separately, a holder 3 was formed using polypropylene resin in a shape with a ventilation opening 3c with an inner diameter of 2.6 mm. The molded holder 3 and the elastic body 2 were combined and fused by applying heat and pressure at 185°C for 1 second to obtain a flow rate regulation filter 1.

This filter 1 was arranged in the front stage of the valve 7 in the fuel container 10 shown in Fig. 1. The storage chamber 30 was filled with a liquid fuel F 5 ml which was made of 10 wt % of aqueous methanol solution (methanol/water ratio: 10/90 aqueous solution) and a gas chamber 4 was filled with nitrogen as a compression gas to achieve a gas pressure of 300 kPa. When the partition member 5 shifted to the upper end, a gas pressure was 100 kPa. A stem 72 of the valve 7 was collapsed in order to discharge the liquid fuel F. The total amount of discharging of the liquid contents was completed in 15 minutes.

Example 2

Thermally plasticized high density polyethylene resin, urea and polyethylene glycol were finely pulverized to prepare an emulsion with an average cell diameter of 10 $\mu$m and a pore ratio of 80%. This emulsion was molded in a sheet form with a thickness of 1 mm to prepare a porous sheet by removing the aqueous paste by rinsing with water. An elastic body 2 was obtained by punching out in a specified shape. This elastic body 2 and the molded holder 3 made of the same polypropylene in Example 1 were combined to be fused by heating and by applying pressure at 185°C for 1 second to obtain a flow rate regulation filter 1.

This filter 1 was arranged at the same front stage of the valve in the fuel container 10 as shown in Fig. 1 as in Example 1. The storage chamber 30 was filled with a liquid fuel F 5 ml which was made of 10 wt % of aqueous methanol solution and a gas chamber 4 was filled with nitrogen as a compression gas to achieve a gas pressure of 300 kPa. When the partition member 5 shifted to the upper end, a gas pressure was 100 kPa. A stem 72 of the valve 7 was collapsed in order to discharge the liquid fuel F. The total amount of discharging of the liquid contents was completed in 500 hours.

Example 3

Thermally plasticized high density polyethylene resin, urea and polyethylene glycol were finely pulverized to prepare an emulsion with an average cell diameter of 10 $\mu$m and a pore ratio of 80%. This emulsion was molded in a sheet form with a thickness of 1 mm to prepare a porous sheet by removing the aqueous paste by rinsing with water. An elastic body 2 was obtained by punching out in a specified shape. This elastic body 2 and the molded holder 3 made of the same polypropylene in Example 1 were combined to be fused by heating and by applying pressure at 185°C for 1 second to obtain a filter 1.

This filter 1 was arranged at the same front stage of the valve 7 in the fuel container 100 shown in Fig. 5. The storage chamber 13 was filled with a DME liquefied gas LG 5 ml. The DME liquefied gas LG stored in the storage chamber 13 was discharged by opening the valve 7. As a result, a gas fluid was discharged steadily at a flow rate of 35 ml/min.

As mentioned above, with the flow rate regulation filter of the present invention, the flow rate of discharging the liquid contents can be easily adjusted through the elastic body having continuous pores. When used in a fuel container in a fuel cell, the fuel can be supplied stably in small portions to the fuel cell. In particular, since the flow rate regulation filter of the present invention is located in the discharge flow path of a fuel container of a fuel cell wherein the fuel container accommodates the liquid contents of a liquid fuel for the fuel cell such that the fuel container is capable of discharging the liquid contents in a liquid state or a gaseous state, a large-scale flow rate adjustment mechanism is not needed. Thus, this will meet the requirements for production of small-sized/light weight fuel containers for a fuel cell.

Since both the elastic body and the holder are made of a thermoplastic resin which is not corroded by the liquid contents, there is no corrosion by the liquid contents which is a liquid fuel for fuel cells and elution of the corrosion products from the filter does not clog the nozzles of the fuel container of a fuel cell. Durability seemed to be improved due to the absence of corrosion.

Moreover, the flow rate regulation filter of the present invention is compatible when the liquid contents of the liquid fuel for a fuel cell is discharged in a liquid state or in a gaseous state. Thus, if this flow rate regulation filter is installed in the conventional pressure container, fuel can be supplied in a stable manner from the fuel container for a fuel cell.

In addition, the fuel container for a fuel cell as disclosed in the present invention can be applied as a small quantity ejection aerosol container for general repellants (insect repellants) and aromatics as well as uses as fuel containers for a fuel cell.

**Claims**

1. A flow rate regulation filter which is installed in a discharge flow path of a fuel container of a fuel cell wherein the fuel container accommodates liquid contents of a liquefied fuel such that the fuel container is capable of discharging the liquid contents in a liquid state or in a gaseous state, which is **characterized in that** the flow rate regulation filter is comprised of an elastic body having continuous pores, and a holder which is consisted of a molded body fused to the elastic body to ensure that this elastic body blocks the discharge flow path, and the elastic body and the holder are made of a thermoplastic resin which is not corroded by the liquid contents.

2. The flow rate regulation filter as described in Claim 1 wherein said thermoplastic resin is at least one selected from the group consisting of polyethylene, polypropylene, polyoxymethylene, polyethyleneterephthalate, polyethylene naphthalate or polyacrylnitrile.

3. The flow rate regulation filter as described in Claim 1 or Claim 2 wherein said elastic body is obtained by the following process: after mixing said thermoplastic resin, an aqueous organic compound and an aqueous polymer material, said aqueous organic compound and said aqueous polymer material are extracted and removed by water.

4. The flow rate regulation filter as described in Claim 1 or Claim 2 or Claim 3 wherein said elastic body has a pore diameter of 30 $\mu$m or less and a pore ratio ranging from 60 to 90%.

5. A fuel container for a fuel cell **characterized in that** said fuel container for a fuel cell is comprised of a container body having a connection portion that is opened externally for supplying the liquid contents, a storage chamber that is formed in the interior of the container body for storing said liquid contents, an extrusion means by extruding the liquid contents in the storage chamber under the pressure of the compressed gas in the gas chamber that is formed separately from said storage chamber, a valve for connecting and blocking between said storage chamber and said connection portion, the flow rate regulation filter described in one of Claims 1 through 4 that is arranged in the path from said storage chamber to said connection portion, wherein the amount of discharging said liquid contents is adjusted through the flow rate regulation filter.

6. The fuel container for a fuel cell described as in Claim 5 or Claim 6 wherein said liquid contents is one selected from the group consisting of methanol, methanol and pure water, ethanol, ethanol and pure water, dimethyl ether and pure water, dimethyl ether and pure water and methanol, and dimethyl ether and pure water and ethanol.

7. A fuel container for a fuel cell **characterized in that** said fuel container for a fuel cell is comprised of a container body having a connection portion that is opened externally for supplying the liquid contents and a storage chamber for storing the contents, a valve for connecting/blocking between said connection portion and said storage chamber, and the flow rate regulation filter described in one of Claims 1 through 4 that is arranged in the path from said storage chamber to said connection portion, wherein the gases vaporized from the liquid contents in said storage chamber are discharged via said valve under the pressure of the gases, and the amount of said gases to be discharged is adjusted by said flow rate regulation filter.

8. The fuel container for a fuel cell described as in Claim 5 wherein said liquid contents are dimethyl ether.

9. A fuel container for a fuel cell **characterized in that** said fuel container for a fuel cell is comprised of a container body having a connection portion that is opened externally for supplying the liquid contents, a storage chamber for storing the contents that is formed in the interior of the container body, a valve for connecting/blocking between said connection portion and said storage chamber, and the flow rate regulation filter described in one of Claims 1 through 4 that is arranged in the path from said storage chamber to said connection portion, wherein the liquid contents in said storage chamber are discharged via said valve under the pressure of liquid contents, and the amount of said gases to be discharged is adjusted by said flow rate regulation filter.

10. The fuel container for a fuel cell described as in Claim 9 wherein said liquid contents is one selected from the group consisting of dimethyl ether, dimethyl ether and pure water, dimethyl ether and pure water and methanol, and dimethyl ether and pure water and ethanol.

11. A pressure container **characterized in that** it is comprised of a container body having a connection portion that is opened externally for supplying the liquid contents, a storage chamber that is formed in the interior of the container body for storing said liquid contents, an extrusion means by extruding the liquid contents in the storage chamber under the pressure of the compressed gas in the gas chamber that is formed separately from said storage chamber, a valve for connecting and blocking between said storage chamber and said connection portion, the flow rate regulation filter described in one of Claims 1 through 4 that is arranged in the path from said storage chamber to said connection portion, wherein the amount of discharging said liquid contents is adjusted through the flow rate regulation filter.

12. A pressure container **characterized in that** it is comprised of a container body having a connection portion that is opened externally for supplying the liquid contents and a storage chamber for storing the contents, a valve for connecting/blocking between said connection portion and said storage chamber, and the flow rate regulation filter described in one of Claims 1 through 4 that is arranged in the path from said storage chamber to said connection portion, wherein the gases vaporized from the liquid contents in said storage chamber are discharged via said valve under the pressure of the gases, and the amount of said gases to be discharged is adjusted by said flow rate regulation filter.

13. A pressure container **characterized in that** it is comprised of a container body having a connection portion that is opened externally for supplying the liquid contents, a storage chamber for storing the contents that is formed in the interior of the container body, a valve for connecting/blocking between said connection portion and said storage chamber, and the flow rate regulation filter described in one of Claims 1 through 4 that is arranged in the path from said storage chamber to said connection portion, wherein the liquid contents in said storage chamber are discharged via said valve under the pressure of the liquid contents, and the amount of said gases to be discharged is adjusted by said flow rate regulation filter.

(a)

(b)

(c)

Fig. 1

Fig. 2

Fig. 3

Fig. 4

Fig. 5

Fig. 6

Fig. 7

### INTERNATIONAL SEARCH REPORT

| International application No. |
| --- |
| PCT/JP2005/005310 |

| A. CLASSIFICATION OF SUBJECT MATTER |
| --- |
| Int.Cl$^7$  H01M8/04, H01M8/06, B05B9/04, B65D83/44 |
| According to International Patent Classification (IPC) or to both national classification and IPC |

| B. FIELDS SEARCHED |
| --- |
| Minimum documentation searched (classification system followed by classification symbols) |
| Int.Cl$^7$  H01M8/04, H01M8/06, B05B9/04, B65D83/44 |

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| A | JP 10-329879 A  (Toyo Aerosol Industry Co., Ltd.), 15 December, 1998 (15.12.98), (Family: none) | 1-13 |
| A | JP 11-349932 A  (Osaka Shipbuilding Co., Ltd.), 21 December, 1999 (21.12.99), (Family: none) | 1-13 |
| A | JP 2000-238868 A  (Osaka Shipbuilding Co., Ltd.), 05 September, 2000 (05.09.00), (Family: none) | 1-13 |
| A | JP 2003-176899 A  (Tokai Corp.), 27 June, 2003 (27.06.03), (Family: none) | 1-13 |

[X] Further documents are listed in the continuation of Box C.　　　[ ] See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 20 June, 2005 (20.06.05) | 05 July, 2005 (05.07.05) |

| Name and mailing address of the ISA/ | Authorized officer |
| --- | --- |
| Japanese Patent Office | |
| Facsimile No. | Telephone No. |

Form PCT/ISA/210 (second sheet) (January 2004)

**INTERNATIONAL SEARCH REPORT**

International application No.

PCT/JP2005/005310

C (Continuation).    DOCUMENTS CONSIDERED TO BE RELEVANT

| Category* | Citation of document, with indication, where appropriate, of the relevant passages | Relevant to claim No. |
|---|---|---|
| P,A | JP 2004-307029 A  (Kabushiki Kaisha Daiso),<br>04 November, 2004 (04.11.04),<br>(Family: none) | 1-13 |
| P,A | JP 2004-237242 A  (Kabushiki Kaisha Daiso),<br>26 August, 2004 (26.08.04),<br>(Family: none) | 1-13 |
| P,A | JP 2004-267627 A  (Toto Ltd.),<br>30 September, 2004 (30.09.04),<br>(Family: none) | 1-13 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003297401 A
- JP 6310166 A
- JP 2002505511 A

- JP 2003176899 A
- JP 2003270600 A
- JP 2003297049 A

### Non-patent literature cited in the description

- *Research and Development of Solid Polymer Type Fuel Cells: Research on a Solid Polymer Type Fuel Cell (PEFC) Using Dimethyl Ether (DME) as a Fuel,* 2001
- *New Energy And Industrial Technology Development Organization, independent administrative corporation in Japan,* March 2002, http//www.nedo.go.jp

- *Basic Technology Research Promoting Work: Research on a Micro Solid Oxide Type Fuel Cell Using DME·LPG as a Fuel,* 2002
- *New Energy And Industrial Technology Development Organization, independent administrative corporation in Japan,* March 2003, http//www.nedo.go.jp